# EUROPEAN PATENT APPLICATION

(11) **EP 0 537 862 A1**
(43) Date of publication of application: **21.04.1993**
(21) Application number: 92203180.2
(22) Date of filing: 15.10.1992
(51) Int. Cl.: B01J 23/40, B01J 35/10

(54) **Catalyst and process for the catalytic partial oxidation of hydrocarbons**

(30) Priority: 17.10.1991 EP 91202700
(71) Applicant: SHELL INTERNATIONALE RESEARCH MAATSCHAPPIJ B.V., NL-2596 HR Den Haag (NL)
(72) Inventor: van Grinsven, Petrus Franciscus Antonius, NL-1031 CM Amsterdam (NL); Reinalda, Donald, NL-1031 CM Amsterdam (NL)

(57) **Abstract**

A catalyst suitable for the catalytic partial oxidation of hydrocarbons comprising at least one noble metal of Group VIII of the Periodic System of Elements deposited on α-alumina having at least 90 % of its pore volume in pores of a size of at least 2000 nm.

## Description

This invention relates to a catalyst suitable for the partial oxidation of hydrocarbons and to a catalytic partial oxidation process using such a catalyst.

Process studies have shown that catalytic partial oxidation (GPO) of hydrocarbons, suitably natural gas, is an attractive process for the production of synthesis gas, a mixture of GO and H₂, which can be used for the production of several commodities such as methanol, gasoline, gas oil, luboil, paraffin wax and the like. As compared with non-catalytic thermal partial oxidation GPO offers a higher thermal efficiency, a lower oxygen requirement and a potential capital reduction because significantly higher gas throughputs can be applied in GPO-reactors than in reactors for non-catalytic partial oxidation.

In the GPO-process it is useful to apply such high temperatures as 1100-1200 °C because at these temperatures nearly the total hydrocarbon feed is converted to synthesis gas while the production of by-products such as H₂O, CO₂ and soot is minimal.

Many catalysts are known to be suitable for GPO but none of them is stable at temperatures as high as 1100-1200 °C.

Applicants have now found that very stable catalysts, suitable for high temperature GPO, can be prepared, if α-alumina with very large pores is applied as catalyst carrier, in combination with one or more noble metals of group VIII as active component(s).

The invention therefore relates to a catalyst suitable for the catalytic partial oxidation of hydrocarbons comprising at least one noble metal of Group VIII of the Periodic System of Elements deposited on α-alumina having at least 90 % of its pore volume in pores of a size of at least 2000 nm.

These catalysts exhibit good catalytic activity and are thermally stable. Even better catalysts are obtained if α-alumina having at least 90% of its pore volume in pores of a size of at least 6000 nm is used as a carrier for the present catalyst.

The role of the catalyst in CPO is thought to be to scavenge radicals formed and by this to prevent the formation of soot. In addition to this the use of a catalyst enhances reaction rates and allows high gas velocities while still achieving thermodynamic equilibrium for the prevailing reactions, resulting in low hydrocarbon and CO₂ slip. Moreover, as in CPO excessive high temperatures (as occurring in the flame zone of a thermal non-catalytic partial oxidation process) are prevented, the formation of HCN and NH₃ is avoided.

As mentioned hereinbefore the present catalyst contains at least one noble metal of group VIII of the Periodic Table of Elements. Of these metals platinum, palladium and rhodium are preferred, a combination of Pt, Pd and Rh being particularly preferred, as it gives a very active and stable catalyst. The content of the noble metal(s) of group VIII on the catalyst is preferably in the range of from 0.01 to 2.0 %wt.

Co-impregnation of the noble metal(s) of group VIII with a salt of at least one metal which forms upon calcination an oxide which cannot easily be reduced, on the α-alumina with very large pores gives an active and very stable catalyst and is therefore advantageously applied.

Such metal oxides are thought to form a kind of a barrier to isolate the noble metal sites on the catalyst surface and by this maintaining good noble metal dispersion during the CPO process.

The metal oxides of the metals of Groups 2a, 3a and 3b of the Periodic Table of Elements (as defined on pp 448 and 449 of Handbook of Chemistry and Physics, 44th ed. (1962), published by The Chemical Rubber Publishing Co.) are preferred for this purpose and among these the oxides of Ba, Ca, Mg, Y, La and Al are particularly preferred, Al₂O₃ being the most preferred.

The amount of the stabilizing metal oxide on the catalyst is advantageously in the range from 0.1 to 5.0 %wt.

Before use the present catalyst is suitably dried and calcined. The calcination is preferably carried out in air and at a temperature in the range of from 450 to 550 °C during 1 to 10 hours.

The present invention also relates to a process for the catalytic partial oxidation of hydrocarbons, in particular natural gas which consists substantially of methane, with oxygen.

In this process a good mixing of the hydrocarbon(s), e.g. natural gas, and the oxygen is required to prevent local excess oxygen which can result in too high temperatures and in an overshoot of CO₂. If the mixing is not complete in another part of the catalyst bed soot can be formed by methane cracking in the absence of oxygen. When good mixing is achieved the reaction temperature in the catalyst bed in advantageously maintained in the range of from 1000 to 1200 °C.

Other preferred reaction conditions are a space velocity in the range of from 2000 to 50000 Nl.l⁻¹.h⁻¹ and a pressure in the range from 1 to 100 bar.

The invention will now be further described in more detail by way of example by reference to the following Examples.

### Example 1

Two volumes of CH₄ were thoroughly mixed with one volume of O₂ and then passed over a catalyst according to the invention. The catalyst composition was: 0.5 %wt Pt/0.3 %wt Pd/0.1 %wt Rh deposited on α-alumina, having a pore volume of 0.43 ml/g and an average pore diameter of 9224 nm, more than 90 % of the pore volume consisting of pores of a size of at least 6000 nm. Before use the catalyst was calcined during 6 hours at 450 °C in air. The reaction conditions were:

| | |
|---|---|
| Temperature | 1170 °C |
| Pressure | 5 bar |
| Space velocity | 5000 Nl/l/h |

The methane was nearly completely converted to synthesis gas, a mixture of CO:H₂ = 1:2, the CH₄- and CO₂ in the off-gas being only 0.07 and 0.6 %vol. respectively, which shows that thermodynamic equilibrium has been reached. For more than 200 hours the operation was completely stable. The product gas did not contain HCN and NH₃.

### Example 2

The experiment of Example 1 was repeated using the same conditions with the exception of the catalyst which had the following composition: 0.37 %wt Pt/0.65 %wt Al (as Al₂O₃) deposited by co-impregnation from a solution of platinumnitrate and aluminiumnitrate in water, on substantially identical α-alumina as used in Example 1. Before use the catalyst was calcined during 6 hours at 450 °C in air. The results were equal to those of Example 1.

### Example 3

The experiment of Example 2 was repeated using the same conditions with the exception of the catalyst which had the following composition: 0.5 %wt Pt/0.3 %wt Pd/0.1 %wt Rh deposited on α-alumina, having a pore volume of 0.4 ml/g and an average pore diameter of 9000 nm, more than 90 % of the pore volume consisting of pores of a size of at least 6000 nm. Before use the catalyst was calcined in air at 500 °C during 1 hour. The results were equal to those of Examples 1 and 2.

Various modifications of the invention will become apparent to those skilled in the art from the foregoing description and examples.

Such modifications are intended to fall within the scope of the appended claims.

## Claims

1. A catalyst suitable for the catalytic partial oxidation of hydrocarbons comprising at least one noble metal of Group VIII of the Periodic System of Elements deposited on α-alumina having at least 90 % of its pore volume in pores of a size of at least 2000 nm.

2. The catalyst as claimed in claim 1 in which the α-alumina has at least 90 % of its pore volume in pores of a size of at least 6000 nm.

3. The catalyst as claimed in claim 1 or 2 which comprises platinum.

4. The catalyst as claimed in any one of claims 1-3 which comprises palladium.

5. The catalyst as claimed in any one of claims 1-4 which comprises rhodium.

6. The catalyst as claimed in any one of claims 1-5 which has a content of a least one noble metal of group VIII of the Periodic Table of Elements being in the range of from 0.01 to 2.0 %wt.

7. The catalyst as claimed in any one of claims 1-6 which has been prepared by co-impregnating the α-alumina with at least one solution of at least one compound of at least one noble metal of Group VIII of the Periodic Table of Elements and at least one salt of at least one metal which forms upon calcination an oxide which cannot easily be reduced.

8. The catalyst as claimed in claim 7 in which the metal which cannot easily be reduced is aluminium.

9. The catalyst as claimed in any one of claims 1-8 which has been calcined in air at a temperature in the range of from 450 to 550 °C during 1 to 10 hours.

10. A process for the catalytic partial oxidation of hydrocarbons which comprises passing a gaseous mixture of the hydrocarbons with oxygen or an oxygen-containing gas at elevated temperature over a catalyst as claimed in any one of claims 1 to 9.

11. The process as claimed in claim 10 in which the temperature is in the range of from 1000 to 1200 °C.

12. The process as claimed in claim 10 or 11 in which the space velocity is in the range of from 2000 to 50000 Nl.l⁻¹.h⁻¹.

13. The process as claimed in any one of claims 10-12, in which the pressure is in the range of from 1 to 100 bar.

14. Synthesis gas whenever prepared with the use of the process as claimed in any one of claims 10-13.
